# EUROPÄISCHE PATENTSCHRIFT

(11) **EP 3 569 051 B1**
(45) Veröffentlichungstag und Bekanntmachung des Hinweises auf die Patenterteilung: **01.09.2021**
(21) Anmeldenummer: 19161495.7
(22) Anmeldetag: 08.03.2019
(51) Int. Cl.: A01D 61/00, A01D 61/02

(54) **SCHRÄGFÖRDERER FÜR EINE SELBSTFAHRENDE ERNTEMASCHINE**
INCLINED CONVEYOR FOR A SELF-DRIVING HARVESTING MACHINE
CONVOYEUR INCLINÉ POUR UNE MOISSONNEUSE AUTONOME

(30) Priorität: 18.05.2018 DE 102018112047
(43) Veröffentlichungstag der Anmeldung: 20.11.2019
(73) Patentinhaber: CLAAS Selbstfahrende Erntemaschinen GmbH, 33428 Harsewinkel (DE)
(72) Erfinder: Burbank, Martin, 48231 Warendorf (DE)
(74) Vertreter: CLAAS Gruppe

(56) Entgegenhaltungen:
- EP-A1- 0 212 146
- EP-A1- 2 982 234
- EP-A2- 0 960 840
- DE-A1-102013 109 579
- DE-B- 1 031 555
- US-A1- 2004 195 079

## Beschreibung

Die vorliegende Erfindung betrifft einen Schrägförderer für eine selbstfahrende Erntemaschine, mit einer ersten Umlenkrolle und einer zweiten Umlenkrolle, um welche zumindest zwei parallel zueinander verlaufende bandförmige Zugmittel endlos umlaufen, zwischen denen sich entlang der Länge der Zugmittel verteilte Leisten erstrecken, wobei zumindest eine Umlenkrolle als Antriebsrolle ausgeführt ist, welche gleichmäßig über ihren Umfang verteilt angeordnete Mitnehmer aufweist, wobei zwischen benachbarten Mitnehmern ein teilungsbedingter Freiraum besteht, in welchen an den Zugmitteln innenseitig angeordnete Nocken drehmomentübertragend eingreifen, wobei die Leisten durch Schraubverbindungen mit den Zugmitteln verbunden sind. Die vorliegende Erfindung betrifft weiterhin eine selbstfahrende Erntemaschine.

Aus der DE 10 2009 036 104 B4 ist einen Schrägförderer für einen Mähdrescher gemäß dem Oberbegriff des Anspruches 1 bekannt. Die DE 10 2009 036 104 B4 beschreibt einen Schrägförderer, dessen Zugmittel aus endlos gewickelten Nockenriemen aus gewebelagenverstärktem, vernetztem Polymer bestehen. Die aus einem flexiblen, gummiartigen Material bestehenden Nocken sind an der Innenseite des Riemens angebracht und wirken mit Nockenrädern zusammen, von denen eines zum Antrieb des Riemens dient. Die Nockenräder bestehen aus einer Nabenscheibe, über deren Umfang zylindrische Bolzen lotrecht abragend angeordnet sind. Die Bolzen haben einen Abstand zueinander, welcher der Teilung der Nocken des Riemens entspricht. In den teilungsbedingten Freiraum zwischen den Bolzen greifen die Nocken des Riemens formschlüssig ein. Die Förderleisten werden durch Schraubbolzen mit dem Riemen verbunden, deren Köpfe jeweils in einen Nocken einvulkanisiert sind und an einer flächenmäßig größeren Ankerplatte anliegen, die ebenfalls mit in den Nocken integriert ist. Der jeweilige Gewindeabschnitt des Schraubbolzens erstreckt sich durch ein Loch in dem Riemen hindurch und dient an der Außenfläche des Riemens zur Anbringung einer Förderleiste und der Fixierung durch eine Mutter.

Bei der Ausführungsform mit in die Nocken einvulkanisierten Schraubbolzenköpfen ergibt sich der Nachteil, dass ein Austausch eines defekten Schraubbolzens nicht möglich ist. Das Einvulkanisieren des Schraubenbolzenkopfes sowie abschnittsweise des Gewindeabschnittes und der Ankerplatte in den Nocken erfordert einen hohen Bauraumbedarf, so dass die umgebende Schicht des Nockens relativ dünn ist, was einen frühen Verschleiß bedeutet. Weiterhin stellt das Verschweißen des Schraubbolzens mit der Ankerplatte einen fertigungstechnischen Zusatzaufwand dar, welcher die Herstellkosten erhöht. Des Weiteren wird ein ähnliches Förderband mit den Merkmalen des Oberbegriffs des Anspruchs 1 auch in der US2004195079 A1 offenbart.

Der Erfindung liegt somit die Aufgabe zugrunde, einen Schrägförderer der eingangs genannten Art weiterzubilden, durch den sich die genannten Nachteile vermeiden oder zumindest reduzieren lassen.

Diese Aufgabe wird erfindungsgemäß durch einen Schrägförderer mit den Merkmalen des unabhängigen Anspruches 1 sowie einer selbstfahrenden Erntemaschine mit den Merkmalen des Anspruches 9 gelöst.

Vorteilhafte Weiterbildungen der Erfindung sind Gegenstand der Unteransprüche. Gemäß dem Anspruch 1 wird ein Schrägförderer für eine für eine selbstfahrende Erntemaschine vorgeschlagen. Der Schrägförderer umfasst eine erste Umlenkrolle und eine zweite Umlenkrolle, um welche zumindest zwei parallel zueinander verlaufende bandförmige Zugmittel endlos umlaufen. Zwischen den Zugmitteln erstrecken sich entlang der Länge der Zugmittel verteilte Leisten, welche der Förderung von Erntegut dienen. Die Leisten sind durch Schraubverbindungen mit den Zugmitteln verbunden. Zumindest eine Umlenkrolle ist als eine Antriebsrolle ausgeführt, welche gleichmäßig über den äußeren Umfang verteilt angeordnete radiale Mitnehmer aufweist. Zwischen benachbarten Mitnehmern der als Antriebsrolle dienenden Umlenkrolle besteht ein teilungsbedingter Freiraum, in welchen an den Zugmitteln innenseitig angeordnete Nocken drehmomentübertragend eingreifen. Der Schrägförderer zeichnet sich dadurch aus, dass an den Zugmitteln innenseitig jeweils ein mit Innengewindeabschnitten ausgeführtes Befestigungselement aus einem metallischen Werkstoff zur Befestigung der jeweiligen Leiste angeordnet ist, dessen räumliche Ausdehnung in radialer Richtung und Umfangsrichtung kleiner als der teilungsbedingte Freiraum ist, so dass das Befestigungselement beim Einlaufen im Wesentlichen außer Eingriff mit den Mitnehmern bleibt. Dadurch, dass das Befestigungselement beim Ein- bzw. Umlaufen um die Umlenkrolle außer Eingriff bleibt, wird erreicht, dass das Befestigungselement aus einem metallischen Werkstoff herstellbar ist und dabei einen geräuscharmen Betrieb des Schrägförderers ermöglicht. Zudem lässt sich durch das Vorsehen der Innengewindeabschnitte in dem Befestigungselementes das aus dem Stand der Technik notwendige Verschweißen des Schraubbolzens mit der Ankerpatte vermeiden. Zur Fixierung der jeweiligen Leiste wird eine Schraube von der Außenseite des Zugmittels her eingebracht. Ein weiterer Vorteil besteht darin, dass Innengewindeabschnitte anstelle von Schraubbolzen mit Ankerplatte in dem Befestigungselement vorgesehen sind, so dass bei einer Beschädigung der Schrauben lediglich diese ausgewechselt werden müssen.

Hingegen ist es bei dem aus der DE 10 2009 036 104 B4 bekannten Schrägförderer notwendig, den Schraubbolzen mitsamt dem Nocken auszutauschen.

Eine bevorzugte Weiterbildung sieht vor, dass das Befestigungselement eine Ummantelung aus einem flexiblen Material aufweist, welche das Befestigungselement nahezu vollständig ummantelt. Die Ummantelung umschließt das Befestigungselement mit Ausnahme zumindest der Öffnungen der Innengewindeabschnitte, die der Innenseite des Zugmittels zugewandt sind. Das ummantelte Befestigungselement kann dabei aufgrund der reduzierten räumlichen Ausdehnung mit einer höheren Schicht an flexiblem Material ummantelt werden, als dies bei dem aus dem Stand der Technik bekannten Nocken möglich ist. Die erhöhte Schichtdicke der Ummantelung trägt zu einer höheren Verschleißbeständigkeit bei.

Insbesondere kann das Befestigungselement in die Ummantelung einvulkanisiert oder eingegossen oder umspritzt sein. Bei dem flexiblen Material kann es sich bevorzugt um einen Naturkautschuk oder ein Polymer handeln.

Alternativ kann das Befestigungselement in einen Nocken des Zugmittels einvulkanisiert oder eingegossen oder umspritzt sein. Auf diese Weise kann eine vollständige Ummantelung des Befestigungselementes entfallen. Die Montage der Leisten wird vereinfacht, da die Anzahl an Bauteilen, die zur Montage zusammenzuführen sind, reduziert wird. Die jeweiligen Innengewindeabschnitte des Befestigungselementes sind zudem vor eindringenden Fremdkörpern geschützt.

Gemäß einer möglichen Ausführungsform kann das Befestigungselement lösbar an dem Zugmittel angeordnet sein. Im Fall von Verschleiß ist eine einfache Austauschbarkeit des Befestigungselementes gegeben.

Bevorzugt kann das Befestigungselement im Wesentlichen plattenförmig ausgeführt sein und einen im Wesentlichen trapezförmigen Querschnitt aufweisen. Somit kann die Form des Befestigungselementes annähernd der der Nocken des Zugmittels entsprechen. Dies ist in dem Fall von Vorteil, wenn eine Überlastung des Zugmittels, beispielsweise ein Gutstau im Schrägförderer, zu einer Überdehnung des Zugmittels führt. In einer solchen Situation kann ein zwischen den Mitnehmern der Antriebsrolle befindliches Befestigungselement sich mit einer Flanke an einem Mitnehmer abstützen, so dass ein Durchrutschen vermeidbar ist.

Insbesondere kann das Befestigungselement als ein Gussteil ausgeführt sein.

Besonders bevorzugt kann das Befestigungselement in einem Umformverfahren aus einem Halbzeug herstellbar sein. Insbesondere kann das Befestigungselement aus einem stangenförmigen Halbzeug durch Abkanten hergestellt werden, welches vor oder nach dem Abkanten mit den Innengewindeabschnitten versehen wird. Somit ist das Befestigungselement einfach und kostengünstig herstellbar.

Die vorliegende Erfindung wird nachstehend anhand von in den Zeichnungen dargestellten Ausführungsbeispielen näher erläutert.

Es zeigen:
- Fig. 1: eine perspektivische Ansicht eines Schrägförderer einer selbstfahrenden Erntemasch ine;
- Fig.2: einen Ausschnitt des Schrägförderers mit einer Antriebsrolle und einem Zugmittel;
- Fig.3: eine Detailansicht des Zugmittels mit einer mittels eines Befestigungsele-mentes angeordneten Leiste;
- Fig.4: eine Detailansicht des Zugmittels mit einer durch ein Befestigungselement gemäß einer zweiten Ausführungsform angeordneten Leiste; und
- Fig.5: eine Detailansicht des Zugmittels mit einer durch ein Befestigungselement gemäß einer dritten Ausführungsform angeordneten Leiste.

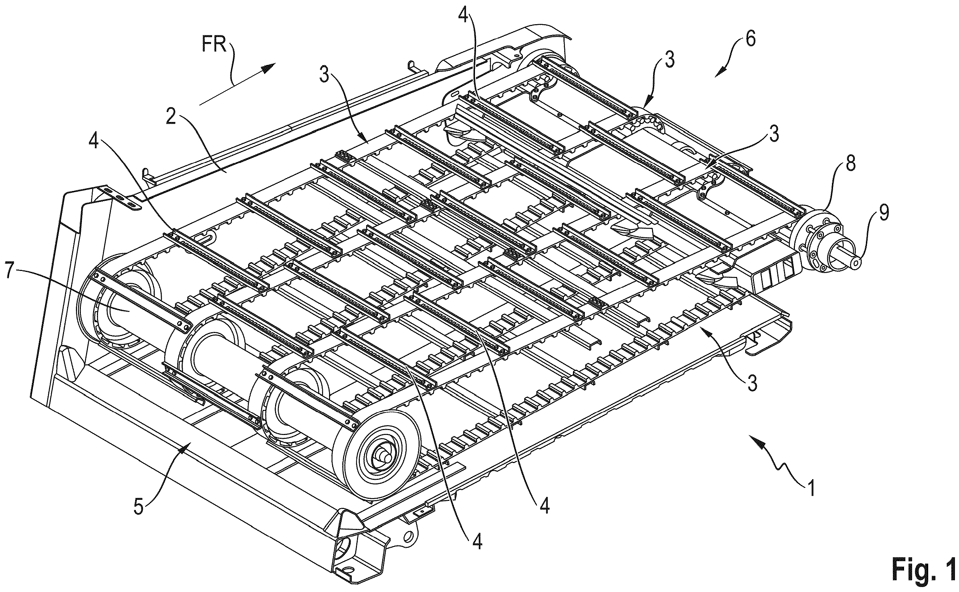

Die Darstellung in Fig. 1 zeigt eine perspektivische Ansicht eines Schrägförderers 1 einer - nicht dargestellten - selbstfahrenden Erntemaschine, insbesondere eines Mähdreschers. Der Schrägförderer 1 dient der Anordnung eines Vorsatzgerätes, durch welches Erntegut aufgenommen wird. Der in Fig. 1 in schematisch gezeigte Schrägförderer 1 besteht im Wesentlichen aus einem Förderergehäuse 2, welches nur teilweise dargestellt ist, und aus mehreren in Längsrichtung des Förderergehäuses 2 endlos umlaufenden Zugmitteln 3, die als Förderband oder -riemen ausgebildet sind. Zwischen den parallel zueinander angeordneten Zugmitteln 3 sind in der Umlaufebene der Zugmittel 3 nach außen weisende Förderleisten 4 befestigt sind. Die Förderleisten 4 sind im vorliegenden Ausführungsbeispiel U-förmig profiliert ausgeführt. Das Förderergehäuse 2 weist gegenüber dem Vorsatzgerät eine Annahmeöffnung 5 und an der hinteren Seite eine ein Arbeitsaggregat der Erntemaschine grenzende Abgabeöffnung 6 auf. Die umlaufenden Zugmittel 3 werden auf einer unteren, im Bereich der Annahmeöffnung 5 angeordneten Umlenkrolle 7 und auf einer oberen im Bereich der Abgabeöffnung 6 angeordneten Umlenkrolle, die als Antriebsrolle 8 ausgeführt ist, geführt. Die Antriebsrolle 8 ist auf einer angetriebenen Welle 9 angeordnet. Ein Pfeil FR gibt die Förderrichtung des unterschlächtig fördernden Schrägförderers 1 wieder.

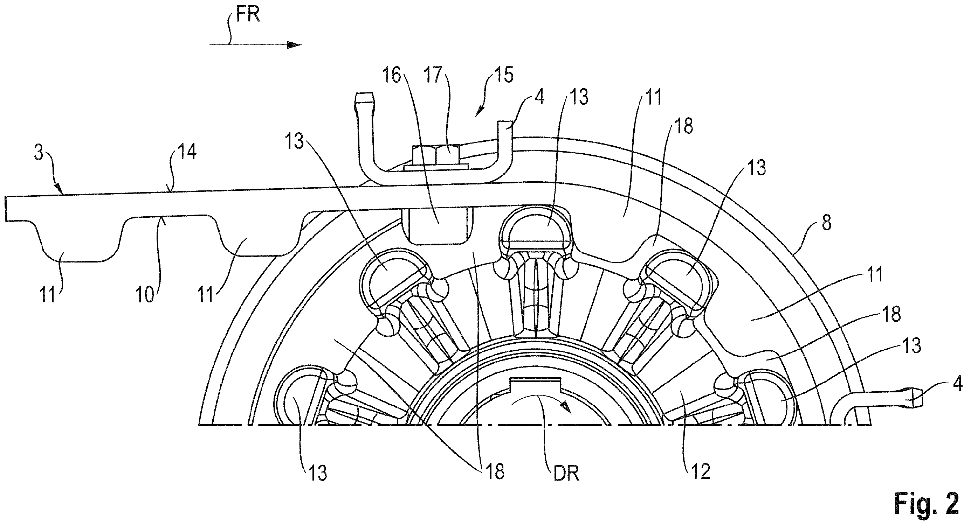

In Fig. 2 ist ein Ausschnitt des Schrägförderers 1 mit der Antriebsrolle 8 und dem Zugmittel 3 dargestellt. Der Ausschnitt zeigt dabei nur eine obere Hälfte der Antriebsrolle 8 und einen Teil des Zugmittels 3 Das Zugmittel 3 besteht aus einem flexiblen Material und ist an seiner Innenseite 10 mit im Wesentlichen trapezförmigen Nocken 11 versehen. Die Antriebsrolle 8 weist zum Antreiben des jeweiligen Zugmittels 3 eine auf der angetriebenen Welle 9 drehfest angeordnete Nabe 12 auf, an der gleichmäßig verteilt Mitnehmer 13 angeordnet sind. Mit dem Pfeil DR ist eine Rotationsrichtung der Antriebsrolle 8 bezeichnet. An seiner Außenseite 14 des Zugmittels 3 sind die Leisten 4 mittels einer Schraubverbindung 15 angeordnet. Die Schraubverbindung 15 wird durch jeweils ein Befestigungselement 16, welches an der Innenseite 10 des Zugmittels 3 angeordnet ist und eine oder mehrere Schrauben 17, welche von der Außenseite 14 her durch die Leiste 4 hindurch zugeführt werden, gebildet. Zum Antreiben des jeweiligen Zugmittels 3 besteht zwischen benachbarten Mitnehmern 13 ein teilungsbedingter Freiraum 18, in welchen die an den jeweiligen Zugmitteln 3 innenseitig angeordnete Nocken 11 drehmomentübertragend eingreifen. Die Nocken 11 liegen zumindest abschnittsweise formschlüssig an den Mitnehmern 13 an und werden von diesen in Rotationsrichtung DR der Antriebsrolle 8 mitgenommen.

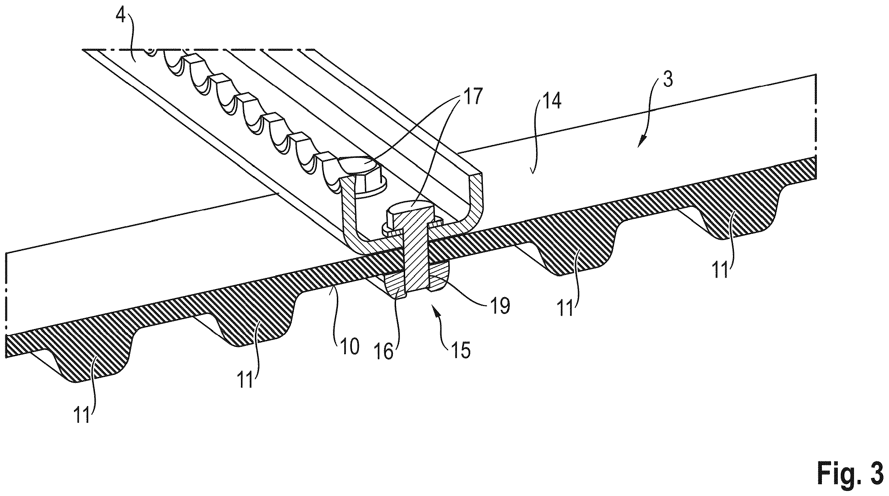

Die Darstellung in Fig. 3 zeigt eine Detailansicht des Zugmittels 3 mit einer mittels des Befestigungselementes 16 an der Außenseite 14 des Zugmittels 3 angeordneten Leiste 4 im Längsschnitt. Die Leiste 4 ist mittels zweier Schrauben 17 mit dem an der Innenseite 10 des Zugmittels 3 angeordneten Befestigungselements 16 verbunden. Das Befestigungselement 16 weist einen im Wesentlichen trapezförmigen Querschnitt auf und erstreckt sich im Wesentlichen über die Breite des Zugmittels 3. Im Inneren des aus einem metallischen Werkstoff hergestellten Befestigungselementes 16 sind Innengewindeabschnitte 19 ausgebildet. In diese Innengewindeabschnitt 19 wird der mit einem Gewinde versehene Schaft der jeweiligen Schraube 17 eingeschraubt, um die Leiste 4 an dem Zugmittel 3 lösbar zu fixieren. Das Befestigungsmittel 16 weist im Unterschied zu den benachbarten Nocken 11 eine räumliche Ausdehnung in radialer Richtung und Umfangsrichtung auf, die kleiner als der teilungsbedingte Freiraum zwischen den Mitnehmern 13 ist, so dass das Befestigungselement 16 beim Einlaufen in die Antriebrolle 8 bzw. zwischen deren Mitnehmer 13 im Wesentlichen außer Eingriff mit den Mitnehmern 13 bleibt. Dadurch lässt sich die Geräuschemission des umlaufenden Zugmittels 3, an dem die Leisten 4 mit einem aus einem metallischen Werkstoff hergestellten Befestigungselementes 16 befestigt sind, deutlich reduzieren.

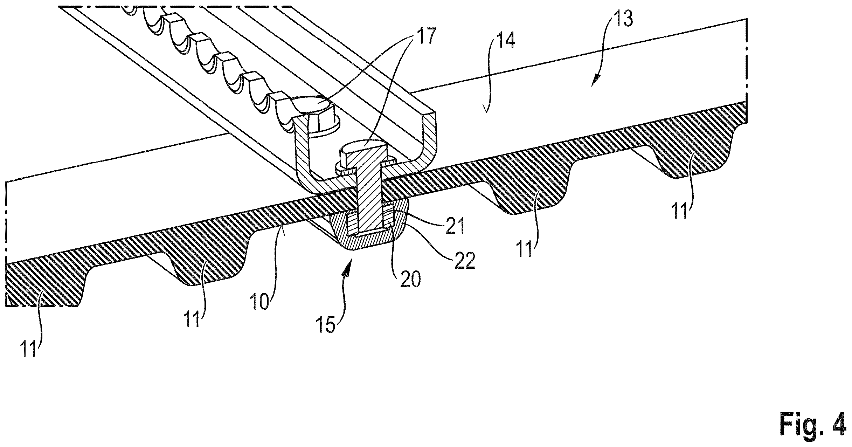

In Fig. 4 ist eine Detailansicht des Zugmittels 3 mit einer durch ein Befestigungselement 20 gemäß einer zweiten Ausführungsform angeordneten Leiste 4 im Längsschnitt dargestellt. In der nachfolgend wurden für identische Bauteile die bereits verwendeten Bezugszeichen beibehalten. Die Schraubverbindung 15 wird ebenfalls durch jeweils ein Befestigungselement 20 mit Innengewindeabschnitten 21, welches an der Innenseite 10 des Zugmittels 3 angeordnet ist und eine oder mehrere Schrauben 17, welche von der Außenseite 14 her durch die Leiste 4 hindurch zugeführt wird, gebildet. Das Befestigungselement 20 unterscheidet sich von dem Befestigungselement 16 gemäß der ersten Ausführungsform dadurch, dass eine Ummantelung 22 aus einem flexiblen Material vorgesehen ist, in die das Befestigungselement 16 eingebettet ist. Die Ummantelung umschließt das Befestigungselement 20 vollständig mit Ausnahme zweier Öffnungen oberhalb der Innengewindeabschnitte 21 ummantelt. Das flexible Material der Ummantelung 22 besteht dabei vorzugsweise aus Naturkautschuk oder einem Polymer. Die Ummantelung 22 umschließt das Befestigungselement 20 mit seinen Innengewindeabschnitten 21 derart, dass das Befestigungselement 20 auch an seiner an die Innenseite 10 des Zugmittels 3 angrenzenden Seite durch das flexible Material 22 beabstandet ist. Dabei ist die räumliche Ausdehnung in radialer Richtung und Umfangsrichtung des Befestigungselementes 20 mit der Ummantelung 22 durch das flexible Material ebenfalls so gewählt, dass das Befestigungselement 20 beim Einlaufen in die Antriebrolle 8 bzw. zwischen deren Mitnehmer 13 im Wesentlichen außer Eingriff mit den Mitnehmern 13 bleibt.

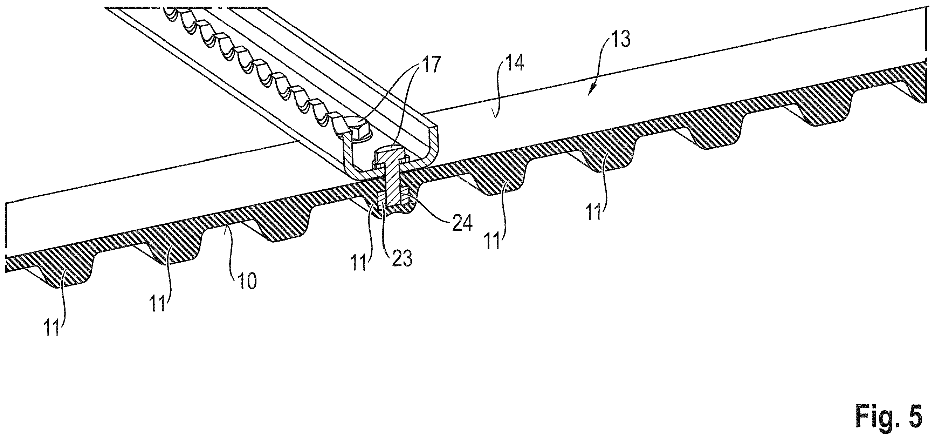

Fig. 5 zeigt eine Darstellung einer Detailansicht des Zugmittels 3 mit einer durch ein Befestigungselement 23 gemäß einer dritten Ausführungsform angeordneten Leiste 4 im Längsschnitt. Das Befestigungselement 23 unterscheidet sich von den Befestigungselementen 16 und 20 gemäß den vorangehend beschriebenen Ausführungsformen dadurch, dass das Befestigungselement 23 vollständig in einen Nocken 11 des Zugmittels 3 einvulkanisiert ist. Besteht der Nocken 11 aus einem Polymer, so kann das das Befestigungselement 23 vollständig in den Nocken 11 eingegossen oder umspritzt werden. Dadurch entfällt der Fertigungsschritt des Ummantelns des Befestigungselementes 23. Zudem wird die Montage der Leisten 4 vereinfacht, da nur die zu montierende Leiste 4 positioniert und gehalten werden muss. Ein weiterer Vorteil besteht darin, dass Innengewindeabschnitte 24 des Befestigungselementes 23 vor dem Eindringen von Fremdkörpern geschützt sind.

### Bezugszeichenliste

- 1: Schrägförderer
- 2: Förderergehäuse
- 3: Zugmittel
- 4: Leiste
- 5: Annahmeöffnung
- 6: Abgabeöffnung
- 7: Untere Umlenkrolle
- 8: Obere Umlenkrolle
- 9: Welle
- 10: Innenseite von 3
- 11: Nocken
- 12: Nabe
- 13: Mitnehmer
- 14: Außenseite von 3
- 15: Schraubverbindung
- 16: Befestigungselement
- 17: Schraube
- 18: Freiraum
- 19: Innengewindeabschnitt
- 20: Befestigungselement
- 21: Innengewindeabschnitt
- 22: Ummantelung
- 23: Befestigungselement
- 24: Innengewindeabschnitt

## Patentansprüche

1. Schrägförderer (1) für eine selbstfahrende Erntemaschine, mit einer unteren Umlenkrolle (7) und einer oberen Umlenkrolle (8), um welche zumindest zwei parallel zueinander verlaufende, bandförmige Zugmittel (3) endlos umlaufen, zwischen denen sich entlang der Länge der Zugmittel (3) verteilte Leisten (4) erstrecken, welche durch Schraubverbindungen (15) mit den Zugmitteln (3) verbunden sind, wobei zumindest eine Umlenkrolle (7, 8) als Antriebsrolle ausgeführt ist, welche gleichmäßig über ihren Umfang verteilt angeordnete Mitnehmer (13) aufweist, wobei zwischen benachbarten Mitnehmern (13) ein teilungsbedingter Freiraum (18) besteht, in welchen an den Zugmitteln (3) innenseitig angeordnete Nocken (11) drehmomentübertragend eingreifen, **dadurch gekennzeichnet, dass** an den Zugmitteln (3) innenseitig jeweils ein mit Innengewindeabschnitten (19, 21, 24) ausgeführtes Befestigungselement (16, 20, 23) aus einem metallischen Werkstoff zur Befestigung der jeweiligen Leiste (4) angeordnet ist, dessen räumliche Ausdehnung in radialer Richtung und Umfangsrichtung kleiner als der teilungsbedingte Freiraum (18) ist, so dass das Befestigungselement (16, 20, 23) beim Einlaufen im Wesentlichen außer Eingriff mit den Mitnehmern (13) bleibt.

2. Schrägförderer (1) nach Anspruch 1, **dadurch gekennzeichnet, dass** das Befestigungselement (20, 23) eine Ummantelung (22) aus einem flexibles Material aufweist, welche das Befestigungselement (20, 23) nahezu vollständig ummantelt.

3. Schrägförderer (1) nach Anspruch 2, **dadurch gekennzeichnet, dass** das Befestigungselement (16, 20, 23) in das flexible Material einvulkanisiert ist.

4. Schrägförderer (1) nach einem der Ansprüche 1 bis 3, **dadurch gekennzeichnet, dass** das Befestigungselement (16, 20, 23) in einen Nocken (11) des Zugmittels (3) einvulkanisiert ist.

5. Schrägförderer (1) nach einem der Ansprüche 1 bis 3, **dadurch gekennzeichnet, dass** das Befestigungselement (16, 20) lösbar an dem Zugmittel (3) angeordnet ist.

6. Schrägförderer (1) nach einem der vorangehenden Ansprüche, **dadurch gekennzeichnet, dass** das Befestigungselement (16, 20, 23) im Wesentlichen plattenförmig ausgeführt ist und einen im Wesentlichen trapezförmigen Querschnitt aufweist.

7. Schrägförderer (1) nach einem der vorangehenden Ansprüche, **dadurch gekennzeichnet, dass** das Befestigungselement (16, 20, 23) als ein Gussteil ausgeführt ist.

8. Schrägförderer (1) nach einem der Ansprüche 1 bis 6, **dadurch gekennzeichnet, dass** das Befestigungselement (16, 20, 23) in einem Umformverfahren aus einem Halbzeug herstellbar ist.

9. Selbstfahrende Erntemaschine, insbesondere Mähdrescher, mit einem Schrägförderer (1) nach einem der Ansprüche 1 bis 8.

## Claims

1. An inclined conveyor (1) for a self-propelled harvester comprising a lower deflection roller (7) and an upper deflection roller (8), around which at least two traction means (3) which are in belt form and extend in mutually parallel relationship endlessly circulate and between which extend bars (4) which are distributed along the length of the traction means (3) and which are connected to the traction means (3) by screw connections (15), wherein at least one deflection roller (7, 8) is in the form of a drive roller which has entrainment members (13) arranged distributed uniformly over its periphery, wherein between adjacent entrainment members (13) there is a free space (18) which is governed by the pitch division and into which projections arranged on the traction means (3) at the inside engage in torque-transmitting relationship, **characterised in that** arranged on the traction means (3) at the inside is a respective fixing element (16, 20, 23) having internally threaded portions (19, 21, 24) and comprising a metallic material for fixing the respective bar (4), the spatial extent of the fixing element in the radial direction and in the peripheral direction being smaller than the free space (18) governed by the pitch division so that the fixing element (16, 20, 23) upon entry remains substantially out of engagement with the entrainment members (13).

2. An inclined conveyor (1) according to claim 1 **characterised in that** the fixing element (20, 23) has a casing (22) which comprises a flexible material and which almost completely surrounds the fixing element (20, 23).

3. An inclined conveyor (1) according to claim 2 **characterised in that** the fixing element (16, 20, 23) is vulcanised into the flexible material.

4. An inclined conveyor (1) according to one of claims 1 to 3 **characterised in that** the fixing element (10) is vulcanised into a projection (11) on the traction means (3).

5. An inclined conveyor (1) according to one of claims 1 to 3 **characterised in that** the fixing element (16) is releasably arranged on the traction means (3).

6. An inclined conveyor (1) according to one of the preceding claims **characterised in that** the fixing element (16, 20, 23) is of a substantially plate-shaped configuration and is of a substantially trapezoidal cross-section.

7. An inclined conveyor (1) according to one of the preceding claims **characterised in that** the fixing element (16, 20, 23) is in the form of a casting.

8. An inclined conveyor (1) according to one of claims 1 to 6 **characterised in that** the fixing element (16, 20, 23) can be produced from a semi-finished product in a forming process.

9. A self-propelled harvester, in particular a combine harvester, comprising an inclined conveyor (1) according to one of claims 1 to 8.

## Revendications

1. Convoyeur incliné (1) pour une machine de récolte automotrice, comprenant un rouleau de renvoi inférieur (7) et un rouleau de renvoi supérieur (8) autour desquels défilent sans fin au moins deux moyens de traction en forme de bandes s'étendant parallèlement l'un à l'autre (3) entre lesquels s'étendent des barres (4) qui sont réparties sur la longueur des moyens de traction (3) et qui sont reliées aux moyens de traction (3) par l'intermédiaire de liaisons vissées (15), au moins un rouleau de renvoi (7, 8) étant conformé en rouleau menant qui comporte des moyens d'entraînement (13) disposés de manière uniformément répartie sur sa périphérie, entre des moyens d'entraînement voisins (13) étant ménagé, du fait de leur écartement, un espace libre (18) dans lequel pénètrent, en transmettant un moment de rotation, des reliefs (11) disposés intérieurement sur les moyens de traction (3), **caractérisé en ce que** sur les moyens de traction (3) est disposé intérieurement, pour la fixation de la barre respective (4), respectivement un élément de fixation (16, 20, 23) en matériau métallique qui est pourvu de portions taraudées (19, 21, 24) et dont l'extension spatiale dans la direction radiale et dans la direction circonférentielle est inférieure à l'espace libre (18) dû à l'écartement, de sorte que, lorsqu'il s'y engage, l'élément de fixation (16, 20, 23) reste sensiblement non engrené avec les moyens d'entraînement (13).

2. Convoyeur incliné (1) selon la revendication 1, **caractérisé en ce que** l'élément de fixation (20, 23) comporte un moyen enveloppant (22) en matériau flexible qui enveloppe presque entièrement l'élément de fixation (20, 23).

3. Convoyeur incliné (1) selon la revendication 2, **caractérisé en ce que** l'élément de fixation (16, 20, 23) est intégré par vulcanisation au matériau flexible.

4. Convoyeur incliné (1) selon une des revendications 1 à 3, **caractérisé en ce que** l'élément de fixation (16, 20, 23) est intégré par vulcanisation à un relief (11) du moyen de traction (3).

5. Convoyeur incliné (1) selon une des revendications 1 à 3, **caractérisé en ce que** l'élément de fixation (16, 20) est disposé de façon amovible sur le moyen de traction (3).

6. Convoyeur incliné (1) selon une des revendications précédentes, **caractérisé en ce que** l'élément de fixation (16, 20, 23) est conformé sensiblement en forme de plaque et présente une section transversale sensiblement trapézoïdale.

7. Convoyeur incliné (1) selon une des revendications, **caractérisé en ce que** l'élément de fixation (16, 20, 23) est conçu sous la forme d'une pièce coulée.

8. Convoyeur incliné (1) selon une des revendications 1 à 6, **caractérisé en ce que** l'élément de fixation (16, 20, 23) peut être réalisé par un procédé de déformation à partir d'un demi-produit.

9. Machine de récolte automotrice, en particulier moissonneuse-batteuse, comprenant un convoyeur incliné (1) selon une des revendications 1 à 8.
